# EUROPEAN PATENT APPLICATION

(11) **EP 1 613 090 A2**
(43) Date of publication of application: **04.01.2006**
(21) Application number: 05253788.3
(22) Date of filing: 17.06.2005
(51) Int. Cl.: H04N 7/24

(54) **Data synchronization method and apparatus for digital multimedia data receiver**

(30) Priority: 19.06.2004 KR 2004045854
(71) Applicant: SAMSUNG ELECTRONICS CO., LTD., Suwon-si, Gyeonggi-do (KR)
(72) Inventor: Jeon, Jong-gu, LG Village Apt., Suwon-si Gyeonggi-do (KR); Ryu, Ga-hyun, 9-danji Apt., Suwon-si Gyeonggi-do (KR); Park, Jeong-hoon, LG Village Apt., Suwon-si Gyeonggi-do (KR)
(74) Representative: Davies, Robert Ean

(57) **Abstract**

Provided are a data synchronization method and apparatus for a digital multimedia data receiver. The method includes determining whether to use a program clock reference value or an object clock reference value; and synchronizing audio and video data with reference to a clock obtained by dividing (605) a system clock of the receiver into the program clock reference if the program clock reference value is determined to be used and synchronizing the audio and video data with reference to the clock output from a system timing clock counter into which the value of the object clock reference is set (607) periodically if the object clock reference value is determined to be used. In the data synchronization method and apparatus, clocks of transmitting and receiving sides as well as video and audio data can be synchronized simply and efficiently using PCR or OCR information transmitted from a multimedia broadcasting system.

## Description

The present invention relates to a data synchronization method and apparatus for a digital multimedia data receiver.

A digital multimedia broadcasting (DMB) service is a next-generation digital broadcasting service that can provide clear images even when a TV receiver is moving at high speed. The DMB service includes diverse additional services such as CD-quality audio services, traffic information services, and stock market information services. Such a DMB system follows the MPEG2 and MPEG4 technical standards to transmit AV data with high resolution.

In the DMB system, audio data (BASC) and video data (H.264) are converted into an MPEG4 sync layer (SL) and packetized into an MPEG-2 transport layer (TS) for transmission. Packetized data, i.e., the MPEG-2 TS stream, is processed by a Reed Solomon (RS) encoder and a convolution interleaver and transmitted via a Eureka 147 digital audio broadcasting (DAB) system.

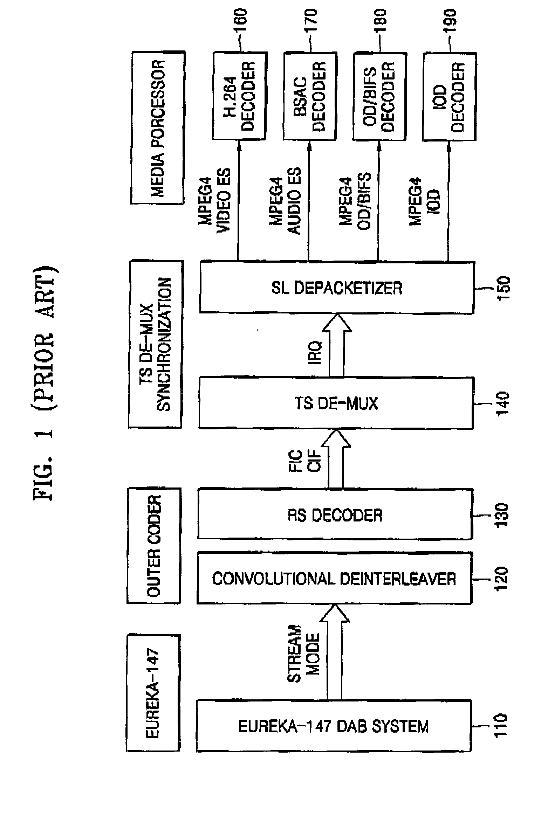

FIG. 1 illustrates a process of extracting audio and video data from data received from a conventional Eureka-147 DAB system 110. A receiver extracts the audio and video data from the data in a reverse process to the process of transmitting data described above.

Referring to FIG. 1, when stream-mode channel data is received from the Eureka-147 DAB system 110, a convolution deinterleaver 120 and an RS decoder 130 that are included in an outer coder extract TS data from the stream-mode channel data. The TS data is demultiplexed into PES data by a TS demultiplexer 140. The PES data is de-packetized by an SL depacketizer 150 and divided into MPEG4 video data, MPEG4 audio data, MPEG4 OD/BIFS, and MPEG 4 IOD, which are then inputted to an H.264 decoder 160, a BSAC decoder 170, an OD/BIFS decoder 180, and an IOD decoder 190, respectively, where the data is synchronized and decoded.

A conventional MPEG2 synchronization method will be briefly described below. In MPEG2, audio data and video data are synchronized using a program clock reference (PCR) value of an MPEG2 TS packet and timestamps of the audio and video data of the MPEG2 TS packet. A system timing clock (STC) synchronization information value of an MPEG system decoder including audio and video decoders is set to a value of an encoder. Further, the arrival timing of bytes in a bit string having SCR (system clock reference) and PCR values at the MPEG system decoder must be precise. Therefore, the STC value of the MPEG system decoder must be set to a PCR value in synchronization with the arrival of the final byte.

If a phase lock loop (PLL) is integrated into the STC, the frequency of the STC in the MPEG system decoder can be perfectly synchronized with a system clock of the encoder. If the STC is synchronized with a decoding timestamp (DTS), the audio and video decoders decode audio data and video data, respectively, using a PLL-corrected STC. If the STC is synchronized with a presentation timestamp (PTS), the audio and video decoders reproduce the video data using the PLL-corrected STC.

A conventional MPEG4 synchronization method will be briefly described below. As in MPEG2, in MPEG4, objects are decoded and displayed on the screen with reference to a DTS and a CTS(Composition Time Stamp) indicating the time required to decode each object using a system time base (STB) and an object time base (OTB). The STB is a time base used to synchronize the decoding and output of objects on the screen. The OTB is a time base of the objects. In MPEG4, the OTB, which is a similar concept to the PCR of MPEG2, is corrected using an object clock reference (OCR). In this process, an software algorithm is used. Audio data and video data in access units (AUs) are decoded based on the corrected OTB and output on the screen.

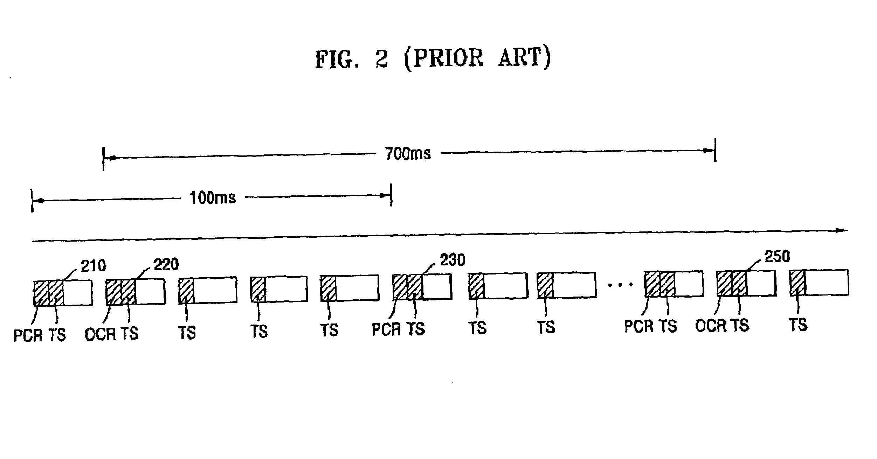

FIG. 2 illustrates synchronization information in an MPEG4 data transmission structure using a conventional MPEG2 transmission method. In the DMB system, audio data and video data can be synchronized using synchronization information provided by the MPEG2 TS and synchronization information provided by the MPEG4 SL. The synchronization information provided in the DMB system includes a PCR value of MPEG2 received within 100ms, an OCR value of the MPEG4 SL received within 700ms, and a CTS value of the MPEG4 SL received within 700ms. The DMB system suggests that audio and video data be synchronized using the PCR, OCR, and CTS values.

Referring to FIG. 2, each packet in the DMB system has a timestamp (TS) signifying timing for decoding each packet. As shown in packets 210 and 230, a PCR value is received within 100ms, and as shown in packets 220 and 260, an OCR value is received within 700ms.

The DMB system provides PCR and OCR values, and audio and video timestamps as synchronization information. However, it has not been suggested yet how to use such synchronization information for simple and efficient synchronization.

Accordingly, it is an aim of embodiments of the present invention to provide a data synchronization method and apparatus for a digital multimedia data receiver to synchronize audio and video data by simply using synchronization information provided by digital media broadcasting (DMB).

According to an aspect of the present invention, there is provided a data synchronization method for a digital multimedia data receiver. The method includes determining whether to use a program clock reference value or an object clock reference value, and synchronizing audio and video data with reference to a clock obtained by dividing a system clock of the receiver into the program clock reference if the program clock reference value is determined to be used and synchronizing the audio and video data with reference to the clock output from a system timing clock counter into which the object clock reference value is set periodically if the object clock reference value is determined to be used.

The determination of whether to use the program clock reference value or the object clock reference value may be made by a user or by the digital multimedia data receiver.

If the program clock reference value is determined to be used, the synchronization of the audio and video data may include providing the system timing clock counter the clock obtained by dividing a system clock of the receiver into the program clock reference, correcting the system clock of the system timing clock counter using a timestamp of a packet to be decoded, and decoding the audio and video data if the timestamp of the packet matches the system clock of the system timing clock counter.

If the object clock reference value is determined to be used, the synchronization of the audio and video data may include providing the object clock reference value to the system timing clock counter periodically, correcting the system clock of the system timing clock counter using the timestamp of the packet to be decoded, and decoding the audio and video data if the timestamp of the packet matches the system clock of the system timing clock counter.

According to another aspect of the present invention, there is provided a data synchronization method for a digital multimedia data receiver, the method including providing a system timing clock counter with the clock obtained by dividing a system clock of the receiver into the program clock reference, decoding audio and video data if a timestamp of a packet to be decoded matches a system clock output from the system timing clock counter, and correcting the system clock of the system timing clock counter using the timestamp of the packet if the timestamp of the packet does not match the system clock.

The correcting of the system clock of the system timing clock counter may include setting a value of the system timing clock counter to a value of the timestamp if the system clock of the system timing clock counter is ahead of the timestamp, and waiting until the value of the timestamp becomes equal to the value of the system timing clock counter if the timestamp is ahead of the system clock of the system timing clock counter.

According to another aspect of the present invention, there is provided a data synchronization method for a digital multimedia data receiver, the method including periodically providing an object clock reference value to a system timing clock counter, decoding audio and video data if a timestamp of a packet to be decoded matches a system clock of the system timing clock counter,and correcting the system clock of the system timing clock counter using the timestamp of the packet if the timestamp of the packet does not match the system clock of the system timing clock counter.

The correcting of the system clock of the system timing clock counter may include setting a value of the system timing clock counter to a value of the timestamp if the system clock of the system timing clock counter is ahead of the timestamp,and waiting until the value of the timestamp becomes equal to the value of the system timing clock counter if the timestamp is ahead of the system clock of the system timing clock counter.

According to another aspect of the present invention, there is provided a data synchronization method for a digital multimedia data receiver, the method including comparing a system clock of the digital multimedia data receiver with a timestamp of a packet to be decoded, setting a value of a system timing clock counter to a value of the timestamp if the system clock is ahead of the timestamp, and waiting until the value of the system clock becomes equal to the value of the timestamp if the timestamp is ahead of the system clock.

According to another aspect of the present invention, there is provided a data synchronization apparatus for a digital multimedia data receiver, the apparatus including a determiner determining whether to use a program clock reference value or an object clock reference value, a program clock reference synchronize synchronizing audio and video data with reference to a clock obtained by dividing a system clock of the receiver into the program clock reference if the program clock reference value is determined to be used, and an object clock reference synchronizer synchronizing the audio and video data with reference to a clock output from a system timing clock counter into which the object clock reference value is set periodically if the object clock reference value is determined to be used.

The program clock reference synchronizer may include a phase lock loop and clock divider locking a clock of the digital multimedia data receiver to the program clock reference value and dividing a system clock of the receiver into the locked clock, a system timing clock counter receiving the divided clocks and outputting a system clock to a timestamp comparator, the timestamp comparator controlling decoding of the audio and video data if a timestamp of a packet to be decoded matches the system clock output from the system timing clock counter, and a clock corrector correcting the system clock of the system timing clock counter using the timestamp of the packet.

The object clock reference synchronizer may include an MPEG4 system data processor providing the object clock reference value to the system timing clock counter periodically, a system timing clock counter receiving the object clock reference value periodically and outputting the system clock of the system timing clock counter to a timestamp comparator, the timestamp comparator controlling decoding of the audio and video data if a timestamp of a packet to be decoded matches the system clock output from the system timing clock counter; and a clock corrector correcting the system clock of the system timing clock counter using the timestamp of the packet.

According to another aspect of the present invention, there is provided a data synchronization apparatus for a digital multimedia data receiver, the apparatus including a phase lock loop and clock divider locking a clock of the digital multimedia data receiver to the program clock reference value and dividing a system clock of the receiver into the locked clock the system timing clock counter receiving the divided clocks and outputting a system clock to a timestamp comparator, the timestamp comparator controlling decoding of audio and video data if a timestamp of a packet to be decoded matches the system clock output from the system timing clock counter, and a clock corrector correcting the system clock of the system timing clock counter using the timestamp of the packet if the timestamp of the packet does not match the system clock of the system timing clock counter.

According to another aspect of the present invention, there is provided a data synchronization apparatus for a digital multimedia data receiver, the apparatus including an MPEG4 system data processor periodically providing an object clock reference value to a system timing clock counter, the system timing clock counter periodically receiving the object clock reference value and outputting a system clock to a timestamp comparator, the timestamp comparator controlling a decoder to decode audio and video data if a timestamp of a packet to be decoded matches the system clock output from the system timing clock counter, and a clock corrector correcting the system clock of the system timing clock counter using the timestamp of the packet if the timestamp of the packet does not match the system clock of the system timing clock counter.

According to another aspect of the present invention, there is provided a data synchronization apparatus for a digital multimedia data receiver, the apparatus including a timestamp comparator comparing a system clock of a system timing clock counter with a timestamp of a packet to be decoded, and controlling decoding of the packet if the timestamp matches the system clock, and to wait until a value of the system clock becomes equal to a value of the timestamp if the timestamp is ahead of the system clock and then decode the packet, and a clock corrector setting a value of the system timing clock counter to the value of the timestamp if the system clock is ahead of the timestamp.

According to another aspect of the present Invention, there is provided A data synchronization method for a digital multimedia data receiver, the method comprising: synchronizing audio and video data with reference to a clock obtained by dividing a system clock of the receiver into a program clock reference if the program clock reference value is determined to be used and synchronizing the audio and video data with reference to a system timing clock counter clock output Into which the object clock reference value is set periodically if the object clock reference value is determined to be used.

For a better understanding of the invention, and to show how embodiments of the same may be carried into effect, reference will now be made, by way of example, to the accompanying diagrammatic drawings in which;
FIG. 1 illustrates a process of extracting audio and video data from data received from a conventional Eureka-147 DAB system;
FIG. 2 illustrates synchronization information in an MPEG4 data transmission structure using a conventional MPEG2 transmission method;
FIG. 3 is a schematic block diagram of an MPEG4 over MPEG2 data decoding apparatus using a program clock reference (PCR) value according to an embodiment of the present invention;
FIG 4 is a schematic block diagram of an MPEG4 over MPEG2 decoding apparatus using an object clock reference (OCR) value according to an embodiment of the present invention;
FIG. 5 is a block diagram of a video decoder illustrated in FIGS. 3 and 4, which corrects clocks, according to an embodiment of the present invention;
FIG. 6 is a flowchart illustrating a synchronization method according to the present invention.

Reference will now be made in detail to embodiments of the present invention, examples of which are illustrated in the accompanying drawings, wherein like reference numerals refer to the like elements throughout. The embodiments are described below to explain the present invention by referring to the figures.

The present invention will now be described more fully with reference to the accompanying drawings, in which exemplary embodiments of the invention are illustrated. The invention may, however, be embodied in many different forms and should not be construed as being limited to the embodiments set forth therein. Rather, these embodiments are provided so that this disclosure will be thorough and complete, and will fully convey the concept of the invention to those skilled in the art.

A program clock reference (PCR) value is a value of a 27 MHz system reference clock used by an encoder, and an object clock reference (OCR) value is composed of 90kHz PCR values into which a PCR value is divided. Therefore, without using two clocks simultaneously, a decoder can correct a clock using only one clock reference value to synchronize the system clocks of the transmitting and receiving sides. In this case, a complicated algorithm is not required to correct the system clock of the receiving side. Since the receiving side uses a 90kHz clock, it can be synchronized with the transmitting side by writing a clock received from the transmitting side to its clock.

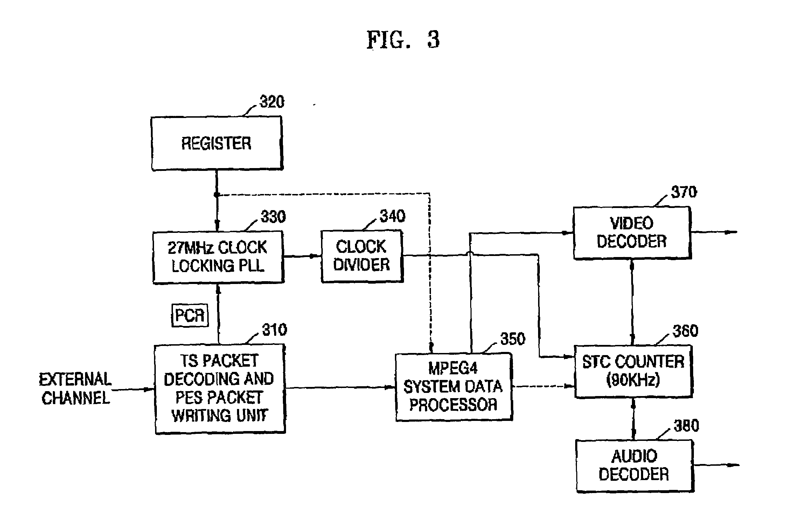

FIG. 3 is a schematic block diagram of an MPEG4 over MPEG2 data decoding apparatus (a DMB system decoding apparatus) using a PCR value according to an embodiment of the present invention. Referring to FIG. 3, the DMB system decoding device includes a TS packet decoding and PES packet writing unit 310, a register used in determining whether to use a PCR value 320 (hereinafter called a register), a 27 MHz clock locking PLL 330, a clock divider 340, an MPEG4 system data processor 350, an STC counter 360, a video decoder 370, and an audio decoder 380.

The TS packet decoding and PES packet writing unit 310 decodes a TS packet received from an external channel, i.e., from a Eureka 147 DAB system, and writes the TS packet into a PES packet. Although not shown in FIG. 3, data received from the external channel is processed by an RS decoder and a convolution interleaver. Then, the TS packet decoding and PES packet writing unit 310 extracts TS data from the data, thereby separating it from TS header information. The header information includes a PCR field containing synchronization information required to synchronize video and audio data.

A value of the register 320 is set according to whether a PCR value will be used. The DMB system decoding apparatus may use a PCR value of an MPEG2 TS packet or an OCR value of MPEG4 data to synchronize audio and video data. A user can set the value of the register 320 through a user interface depending on his or her decision to use a PCR value or an OCR value. Alternatively, a system can set the value of the register 320 internally. There are no limitations on a method and policy of determining whether to use a PCR value or an OCR value. In this way, a value of the register 320 is set according to whether a PCR value or an OCR value will be used.

If a set value of the register 320 indicates the use of a PCR value, the register 320 transmits a signal to the 27 MHz clock locking PLL 330 and activates the same. If the set value of the register 320 indicates the use of an OCR value, the register 320 transmits a signal to the MPEG4 system data processor 350 and activates the same.

The 27 MHz clock locking PLL 330 receives a PCR field of a TS packet from the TS packet decoding and PES packet writing unit 310 and locks a 27 MHz clock using a value of the PCR field. A PCR value is received within 100ms in the DMB system. Thus, the 27 MHz clock locking PLL 330 receives the PCR value cyclically and corrects the 27 MHz clock used in a receiver, i.e., the DMB system decoding apparatus.

The clock divider 340 divides a clock locked by the 27 MHz clock locking PLL 330 into 90 kHz clocks and transmits the 90 kHz clocks to the STC counter 360.

The MPEG4 system data processor 350 receives data from the TS packet decoding and PES packet writing unit 310, extracts audio and video data through SL depacketization, and outputs the video data to the video decoder 370 and the audio data to the audio decoder 380. In addition, the MPEG4 system data processor 350 extracts OCR information, which is synchronization information required to synchronize the audio data and the video data through the SL depacketization. Besides the audio and video data, OD(Object Descriptor) and BIFS(Binary Format For Scene) data may also be extracted (not shown in FIG. 3). The extracted audio data and video data are transmitted to a message queue or a decoding buffer (not shown), which is disposed before the video decoder 370 and the audio decoder 380, in order to be stored until they are decoded.

The STC counter 360 receives the 90 kHz clocks divided by the clock divider 340 using the PCR value and outputs the 90 kHz clocks to the video decoder 370 and the audio decoder 380.

The video decoder 370 receives the video data from the MPEG4 system data processor 350, decodes the video data when the timestamp of the video data is synchronized with the 90 kHz clock received from the STC counter 360, and outputs the decoded video data.

The audio decoder 380 receives the audio data from the MPEG4 system data processor 350, decodes the audio data when the timestamp of the audio data is synchronized with the 90 kHz clock received from the STC counter 360, and outputs the decoded audio data. In fact, the moment when the video decoder 370 decodes the video data coincides with the moment when the audio decoder 380 decodes the audio data. In this case, it does not matter which timestamp is used; that is, whether the timestamp of the video data is compared with the clock value of the STC counter 360 or the timestamp of the audio data is compared with the clock value of the STC counter 360.

Hereinafter, an operation of the digital multimedia broadcasting (DMB) system decoding apparatus when the register 320 is set to use a PCR value will be described.

The 27 MHz clock locking PLL 330 is activated in response to a set value of the register 320, which signifies the use of a PCR value. The 27 MHz clock locking PLL 330 receives a PCR value of a TS packet from the TS packet decoding and PES packet writing unit 310 and locks a 27 MHz clock to the PCR value. The PCR value is divided into 90 kHz clocks by the clock divider 340. Then, the 90kHz clocks are transmitted to the STC counter 360. In this way, the STC counter 360 can be provided with the 90 kHz clocks.

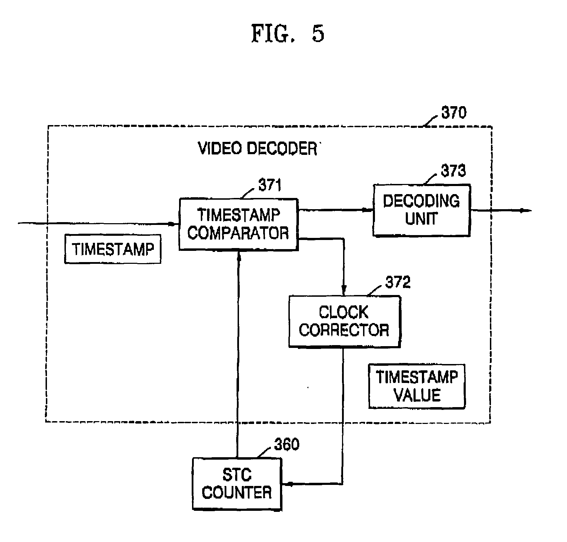

The video decoder 370 and the audio decoder 380 decode a packet when the timestamp of the packet matches the 90 kHz clock provided by the STC counter 360. If the 90 kHz clock provided by the STC counter 360 does not match the timestamp of the packet, the video decoder 370 and the audio decoder 380 wait or perform clock correction. Clock correction will be described in detail later with reference to FIG 5.

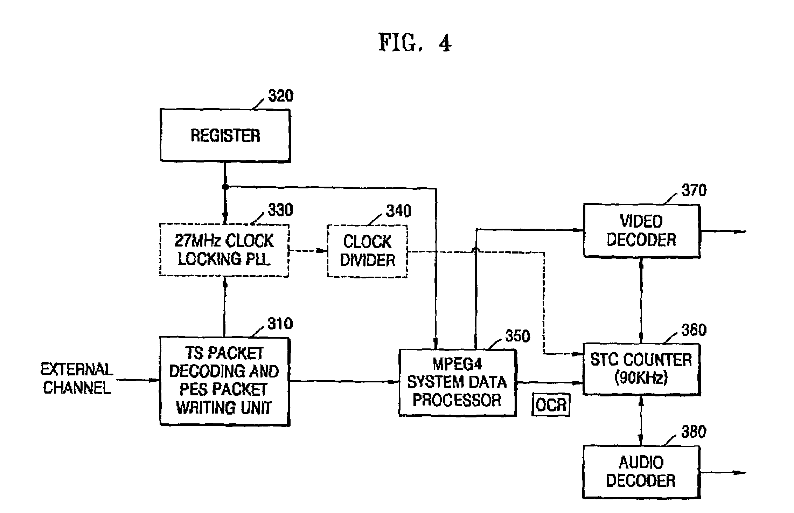

FIG. 4 is a schematic block diagram of an MPEG4 over MPEG2 decoding apparatus (a DMB system decoding apparatus) using an OCR value according to an embodiment of the present invention. The configuration of the DMB system decoding apparatus of FIG. 4 is identical to that of FIG. 3. Elements related to the operation of the DMB system decoding apparatus when the register 320 is set to use a PCR value are indicated by dotted lines. Hereinafter, an operation of the DMB system decoding apparatus when the register 320 is set to use an OCR value will be described.

The MPEG4 system data processor 350 is activated in response to a set value of the register 320, which signifies the use of an OCR value. The MPEG4 system data processor 330 extracts an OCR value from an MPEG4 packet and transmits the OCR value to the STC counter 360. By providing the OCR value densely to the STC counter 360, the MPEG4 system data processor 350 can adjust the value of the STC counter 360 to the OCR field value. In this way, the STC counter 360 can be provided with the 90 kHz clocks.

The video decoder 370 and the audio decoder 380 decode a packet when the timestamp of the packet matches the 90 kHz clock provided by the STC counter 360. If the 90 kHz clock provided by the STC counter 360 does not match the timestamp of the packet, the video decoder 370 and the audio decoder 380 wait or perform clock correction.

FIG. 5 is a block diagram of the video decoder 370 illustrated in FIGS. 3 and 4, which can correct clocks, according to an embodiment of the present invention. Referring to FIG. 5, the video decoder 370 includes a timestamp comparator 371, a clock corrector 372, and a decoding unit 373.

The timestamp comparator 371 receives a timestamp value of an MPEG4 packet from the MPEG4 system data processor 350 and a 90 kHz clock value from the STC counter 360. If the timestamp value of the MPEG4 packet is equal to the 90 kHz clock value, the timestamp comparator 371 transmits a signal to the decoding unit 373 so that the decoding unit 373 can decode MPEG4 packet data.

If the timestamp value is not equal to the clock value, the timestamp comparator 371 waits or performs clock correction. If the 90 kHz clock is ahead of the timestamp, for example, if the timestamp value is 30 and the 90 kHz clock value is 25, the timestamp comparator 371 waits for a period of 5. When the 90 kHz clock value becomes 30, the timestamp comparator 371 transmits a signal to the decoding unit 373 so that the decoding unit 373 can decode the MPEG4 packet data.

If the timestamp is ahead of the 90 kHz clock, for example, If the timestamp value is 30 and the 90 kHz clock value is 35, the timestamp comparator 371 transmits a signal to the clock corrector 372 so that the clock corrector 372 records the timestamp value on the STC counter 360.

In other words, if the timestamp value is smaller than the clock value, the time during which the MPEG4 packet should have been decoded has passed. Therefore, the timestamp comparator 371 determines that there is something wrong with the value of the STC counter 360 and thus adjusts the value of the STC counter 360 to the timestamp value. Upon detecting the adjustment of the value of the STC counter 360 to the timestamp value, the timestamp comparator 371 controls the decoding unit 373 to decode the MPEG4 packet.

This clock correction method can be used in the same manner regardless of whether the DMB system decoding apparatus uses a PCR value or an OCR value as a clock value.

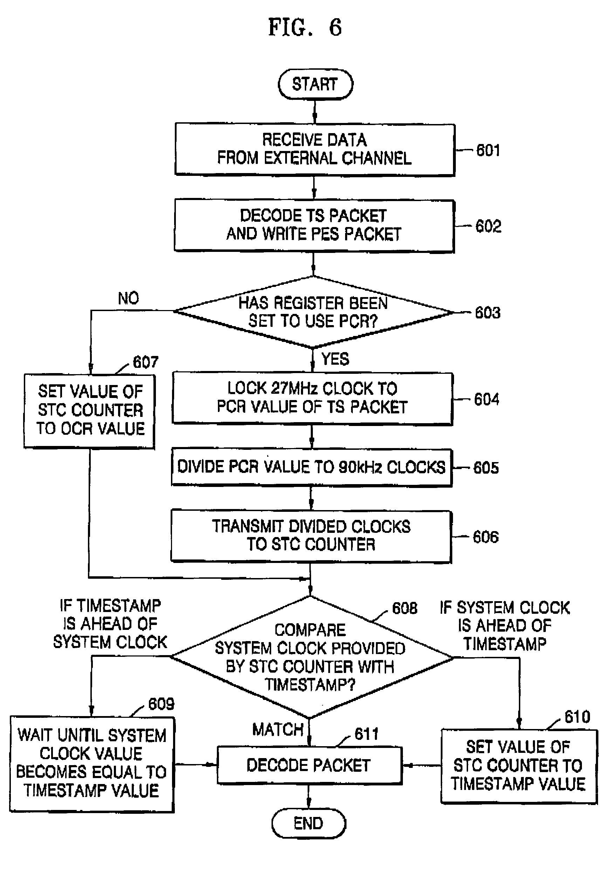

FIG. 6 is a flowchart illustrating a synchronization method according to an embodiment of the present invention. At operation 601, the TS packet decoding and PES packet writing unit 310 receives data from an external channel, and at operation 602, decodes an MPEG2 TS packet, and writes a PES packet. In this process, a PCR field is extracted.

Next, at operation 603, it is determined whether the register 320 is set. At operation 604, if the register 320 is set to use a PCR value, the 27 MHz clock locking PLL 330 locks a 27 MHz clock to a PCR value of a TS packet.

Next, at operation 605, the clock divider 340 divides the PCR value into 90 kHz clocks. Then, at operation 606, the 90 kHz clocks are transmitted to the STC counter 360.

Next, at operation 608, the timestamp comparator 371 compares a system clock value received from the STC counter 360 with a timestamp value of a packet to be decoded. At operation 611, if the system clock value is equal to the timestamp value, the decoding unit 373 decodes the packet.

If the register 320 is set to use an OCR value, the MPEG4 system data processor 350 records the OCR value on the STC counter 360 densely and cyclically in operation 607. Similarly, at operation 611, the timestamp comparator 371 compares a system clock value received from the STC counter 360 with the timestamp value of the packet to be decoded. If the system clock value is not equal to the timestamp value, the decoding unit 373 walts or corrects the value of the STC counter 360 to the timestamp value.

As described above, a synchronization method may be implemented as a computer-readable code on a computer-readable recording medium. The computer-readable recording medium can be any kind of recording device where data readable by a computer system is stored. The computer-readable recording medium includes a ROM, a RAM, a CD-ROM, a magnetic tape, a floppy disk and an optical data storage device, and may also be Implemented as a carrier wave (for example, Internet transmission).

The computer-readable recording medium can be distributed over network-coupled computer systems so that the computer-readable code may be stored and executed in a distributed fashion. Functional programs, codes, and code segments required to implement the present invention can be easily derived by programmers skilled in the art.

As described above, according to embodiments of the present invention, it is possible to simply and efficiently synchronize clocks of transmitting and receiving sides as well as audio and video data using PCR or OCR information received from a multimedia broadcasting system. It would be clear to those skilled in the art that this synchronization method can be applied to any system, as well as a DMB system, which transmits MPEG4 data using an MPEG2 transmission method.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A data synchronization method for a digital multimedia data receiver, the method comprising:
determining (603) whether to use a program clock reference value or an object clock reference value; and
synchronizing audio and video data with reference to a clock obtained by dividing (605) a system clock of the receiver Into the program dock reference if the program clock reference value is determined to be used and synchronizing the audio and video data with reference to the clock output from a system timing clock counter into which the object clock reference value is set periodically If the object clock reference value is determined to be used.

2. The method of claim 1, wherein a determination of whether to use the program clock reference value or the object clock reference value is made by a user or by the digital multimedia data receiver.

3. The method of claim 1 or 2, wherein if the program clock reference value is determined to be used, the synchronization of the audio and video data comprises:
providing (606) the system timing clock counter (360) with the dock obtained by dividing (605) a system clock of the receiver into the program clock reference;
correcting the system clock of the system timing clock counter using a timestamp of a packet to be decoded; and
decoding (611) the audio and video data if the timestamp of the packet matches the system clock of the system timing dock counter.

4. The method of any preceding claim, wherein if the object clock reference value is determined to be used, the synchronization of the audio and video data comprises:
providing (607) the object clock reference value to the system timing clock counter (360) periodically;
correcting the system clock of the system timing clock counter using the timestamp of the packet to be decoded; and
decoding (611) the audio and video data if the timestamp of the packet matches the system clock of the system timing clock counter.

5. A data synchronization method for a digital multimedia data receiver, the method comprising:
providing a system timing clock counter (360) with the clock obtained by dividing (605) a system clock of the receiver into a program clock reference;
decoding (611) audio and video data if a timestamp of a packet to be decoded matches a system clock output from the system timing clock counter; and
correcting the system clock of the system timing clock counter using the timestamp of the packet if the timestamp of the packet does not match the system clock.

6. The method of claim 5, wherein the correcting of the system clock of the system timing clock counter comprises:
setting (610) a value of the system timing clock counter to a value of the timestamp
if the system clock of the system timing clock counter is ahead of the timestamp; and
waiting (609) until the value of the timestamp becomes equal to the value of the system timing clock counter if the timestamp is ahead of the system clock of the system timing clock counter.

7. A data synchronization method for a digital multimedia data receiver, the method comprising:
periodically providing an object clock reference value to a system timing clock counter;
decoding (611) audio and video data if a timestamp of a packet to be decoded matches a system clock of the system timing clock counter; and
correcting the system clock of the system timing clock counter using the timestamp of the packet if the timestamp of the packet does not match the system clock of the system timing clock counter.

8. The method of claim 7, wherein the correcting of the system clock of the system timing clock counter comprises:
setting (610) a value of the system timing clock counter to a value of the timestamp
if the system clock of the system timing clock counter is ahead of the timestamp; and
waiting (609) until the value of the timestamp becomes equal to the value of the system timing clock counter if the timestamp Is ahead of the system clock of the system timing clock counter.

9. A data synchronization method for a digital multimedia data receiver, the method comprising:
comparing (608) a system clock of the digital multimedia data receiver with a timestamp of a packet to be decoded;
setting (610) a value of a system timing clock counter to a value of the timestamp if
the system clock is ahead of the timestamp; and
waiting (609) until the value of the system clock becomes equal to the value of the
timestamp if the timestamp is ahead of the system clock.

10. A data synchronization apparatus for a digital multimedia data receiver, the apparatus comprising:
a determiner operable to determine whether to use a program clock reference value or
an object clock reference value;
a program clock reference synchronizer operable to synchronize audio and video data
with reference to a clock obtained by dividing a system clock of the receiver into the program clock reference if the program clock reference value is determined to be used; and
an object clock reference synchronizer operable to synchronize the audio and video data with reference to a dock output from a system timing clock counter into which the object clock reference value is set periodically if the object clock reference value is determined to be used.

11. The apparatus of claim 10, wherein the determiner is set to use the program clock reference value or the object clock reference value by a user or by the digital multimedia data receiver.

12. The apparatus of claim 10 or 11, wherein the program clock reference synchronizer comprises:
a phase lock loop (330) and clock divider (340) for locking a clock of the digital multimedia data receiver to the program clock reference value and for dividing a system clock of the receiver into the locked clock;
a system timing clock counter (360) for receiving the divided clocks and outputting a system clock to a timestamp comparator (371);
the timestamp comparator being operable to control decoding of the audio and video data if a timestamp of a packet to be decoded matches the system clock output from the system timing clock counter; and
a clock corrector (372) for correcting the system clock of the system timing clock counter using the timestamp of the packet.

13. The apparatus of claim 10, wherein the object clock reference synchronizer comprises:
an MPEG4 system data processor (350) for providing the object clock reference value
to the system timing clock counter (360) for periodically;
a system timing clock counter receiving the object clock reference value periodically and outputting the system clock of the system timing clock counter to a timestamp comparator (371);
the timestamp comparator being operable to control decoding of the audio and video data if a timestamp of a packet to be decoded matches the system clock output from the system timing clock counter; and
a clock corrector (372) for correcting the system clock of the system timing clock counter using the timestamp of the packet.

14. A data synchronization apparatus for a digital multimedia data receiver, the apparatus comprising:
a phase lock loop (330) and clock divider (340) for locking a clock of the digital multimedia data receiver to the program clock reference value and for dividing a system clock of the receiver into the locked clock;
a system timing clock counter (360) for receiving the divided clocks and outputting a system clock to a timestamp comparator (371):
the timestamp comparator being operable to control decoding of audio and video data if a timestamp of a packet to be decoded matches the system clock output from the system timing clock counter; and
a clock corrector (372) for correcting the system clock of the system timing clock counter using the timestamp of the packet if the timestamp of the packet does not match the system clock of the system timing clock counter.

15. The apparatus of claim 14, wherein the clock corrector (372) is operable to set a value of
the system timing clock counter (360) to a value of the timestamp of the packet if the system clock of the system timing clock counter is ahead of the timestamp of the packet, and the timestamp comparator is operable to control a decoder to wait until the value of the system clock of the system timing clock counter becomes equal to the value of the timestamp if the timestamp is ahead of the system clock of the system timing clock counter and then to decode the packet.

16. A data synchronization apparatus for a digital multimedia data receiver, the apparatus comprising:
an MPEG4 system data processor (350) operable to periodically provide an object clockreference value to a system timing clock counter (360);
the system timing clock counter periodically receive the object clock reference value and output a system clock to a timestamp comparator;
the timestamp comparator(371) being operable to control a decoder to decode audio and video data if a timestamp of a packet to be decoded matches the system clock output from the system timing clock counter; and
a clock corrector (372) operable to correct the system clock of the system timing clock counter (360) using the timestamp of the packet if the timestamp of the packet does not match the system clock of the system timing clock counter.

17. The apparatus of claim 16, wherein the clock corrector (372) is operable to set a value of the system timing clock counter (360) to a value of the timestamp of the packet if the system clock of the system timing clock counter is ahead of the timestamp of the packet, and the timestamp comparator (371) is operable to control a decoder to wait until the value of the system clock of the system timing clock counter becomes equal to the value of the timestamp if the timestamp Is ahead of the system clock of the system timing clock counter and then to decode the packet.

18. A data synchronization apparatus for a digital multimedia data receiver, the apparatus comprising:
a timestamp comparator (371) for comparing a system dock of a system timing clock counter with a timestamp of a packet to be decoded and for controlling decoding of the packet if the timestamp matches the system clock and to wait until a value of the system clock becomes equal to a value of the timestamp if the timestamp is ahead of the system clock and then decode the packet; and
a clock corrector (372) for setting a value of the system timing clock counter to the value of the timestamp if the system clock Is ahead of the timestamp.

19. A data synchronization method for a digital multimedia data receiver, the method comprising:
synchronizing audio and video data with reference to a clock obtained by dividing (605) a system clock of the receiver into a program clock reference if the program clock reference value is determined to be used and synchronizing the audio and video data with reference to a system timing clock counter clock output into which the object clock reference value Is set periodically if the object clock reference value is determined to be used.
